# FASCICULE DE BREVET EUROPEEN

(11) **EP 2 738 509 B1**
(45) Date de publication et mention de la délivrance du brevet: **17.10.2018**
(21) Numéro de dépôt: 13194629.5
(22) Date de dépôt: 27.11.2013
(51) Int. Cl.: F28D 20/00, F28D 17/00

(54) **Conteneur de matériau de stockage thermique, à structure renforcée.**
Behälter mit verstärkter Struktur für Wärmespeichermaterial
Container for thermal storage material, with a reinforced structure

(30) Priorité: 28.11.2012 FR 1261371
(43) Date de publication de la demande: 04.06.2014
(73) Titulaire: Electricité de France, 75008 Paris (FR)
(72) Inventeur: Mercier, Eric, 38560 Jarrie (FR); Rouzeyre, Mathieu, 34080 Montpellier (FR)
(74) Mandataire: Cabinet Plasseraud

(56) Documents cités:
- EP-B1- 2 847 535
- DE-A1- 3 101 331
- DE-A1-102006 022 783
- US-A- 4 192 144
- US-A- 4 405 010
- US-A- 4 807 696
- US-A1- 2011 100 583

## Description

La présente invention concerne un conteneur pour stockage thermique.

On connaît des conteneurs de stockage thermique de gros volumes, se présentant souvent comme des systèmes contraints à fonctionner à faibles pressions, tels que :
- les cowpers de hauts fourneaux, avec des matériaux souvent autoportants et supportant une pression de 3-4 bars,
- ou des cuves de sels fondus à pression atmosphérique.

Les cowpers de hauts fourneaux sont des systèmes de récupération de chaleur communément utilisés dans le domaine de l'aciérie ou la verrerie (dénommés « régénérateurs » en verrerie). Ils permettent de récupérer la chaleur des fumées de hauts fourneaux dans des céramiques, pour ensuite réchauffer l'air de combustion de ceux-ci. Les cycles de récupération/extraction (ou « charge/décharge ») de la chaleur de ces céramiques se succèdent toutes les vingt minutes environ. En phase de récupération de chaleur, le système fonctionne à pression atmosphérique, puis, en phase d'extraction de celle-ci par l'air, sous 3-4 bars.

Ces cowpers possèdent des volumes similaires à ceux des systèmes visés dans la présente invention.

Les cuves de stockage de sels fondus sont des systèmes de stockage thermique. Ils sont utilisés notamment dans le domaine électrique pour stocker l'énergie solaire de centrales solaires thermodynamiques, afin d'étendre la période de fonctionnement de ces systèmes de production d'électricité en dehors des périodes d'ensoleillement ou pour réduire les variations de charge consécutives à des passages nuageux. Ces systèmes sont matures aujourd'hui, mais sont contraints par des problématiques de classification industrielle, de coût, et surtout de tenue en température des sels fondus qui se solidifient dès que la température descend en dessous de 250°C.

Ces conteneurs de sels fondus sont sous pression atmosphérique et à des températures de 540°C environ.
La problématique est donc d'être capable de stocker de la chaleur sous de plus hautes pressions que 3-4 bar, ce que ne permet aucun des systèmes présentés ci-avant. De plus, le média de stockage souvent choisi et préféré actuellement pour le stockage thermique consiste en des matériaux solides et non un liquide tel que les sels fondus.

Il est connu de US 2011/0100583 A1 un conteneur d'un système de stockage thermique de haute pression comprenant des tirants interne, ancrés aux parois externes, pour limiter une contrainte s'exerçant vers l'extérieur des parois.

La présente invention vient améliorer la situation.
Elle vise à cet effet un conteneur d'un système de stockage thermique, destiné à recevoir du matériau de stockage thermique entre des parois internes du conteneur, caractérisé en ce qu'il comporte des éléments entretoises, ancrés aux parois internes, pour limiter une contrainte s'exerçant vers l'extérieur des parois. Ainsi, l'invention propose d'agencer des moyens dans le conteneur pour maintenir une contrainte susceptible de s'exercer vers l'extérieur des parois du conteneur. Une telle contrainte tend habituellement à fragiliser mécaniquement le conteneur, avec des risques d'éventration (le matériau de stockage thermique se déversant alors à l'extérieur du conteneur).
Dans une forme de réalisation, les éléments entretoises comportent au moins une grille agencée sensiblement horizontalement dans le conteneur et fixée par au moins deux points d'ancrage sur des parois opposées du conteneur et à une hauteur choisie du conteneur.
Une telle grille permet avantageusement de maintenir au moins une partie du matériau de stockage en hauteur dans le conteneur, tandis qu'une autre partie du matériau est stockée dans une partie inférieure. Ainsi, la grille assure une répartition du matériau à différents niveaux du conteneur. Cette caractéristique est alors avantageuse dans la mesure où, le conteneur pouvant se présenter dans une réalisation sous la forme d'une colonne creuse, la poussée qu'exerce le matériau de stockage sur les parois internes du conteneur, est plus uniforme sur la hauteur du conteneur. Typiquement, on ne retrouve pas dans une réalisation au sens de l'invention la présence de matériau de stockage uniquement en fond de conteneur comme dans l'état de l'art.
On comprendra qu'une telle caractéristique concourt alors à une solution générale de limiter les contraintes (y compris les contraintes locales) susceptibles de s'exercer vers l'extérieur des parois du conteneur.
Il s'agit néanmoins d'une forme de réalisation possible, optionnelle. En complément ou en variante, les éléments entretoises peuvent comporter des tirants (par exemple en acier) fixés à des parois opposées du conteneur.

Dans une réalisation, la grille précitée comporte des ouvertures, notamment pour une circulation de gaz caloporteur (par exemple de l'air) dans le conteneur.

Dans une réalisation, les points d'ancrage précités sont amovibles et comportent chacun, par exemple, un anneau relié à la grille par une chaîne. Cette réalisation permet avantageusement de démonter la grille pour des opérations de maintenance. Elle permet aussi d'absorber les dilatations de la grille pendant les phases de chauffage du matériau de stockage et concourt encore à limiter les contraintes susceptibles de s'exercer vers l'extérieur des parois du conteneur.

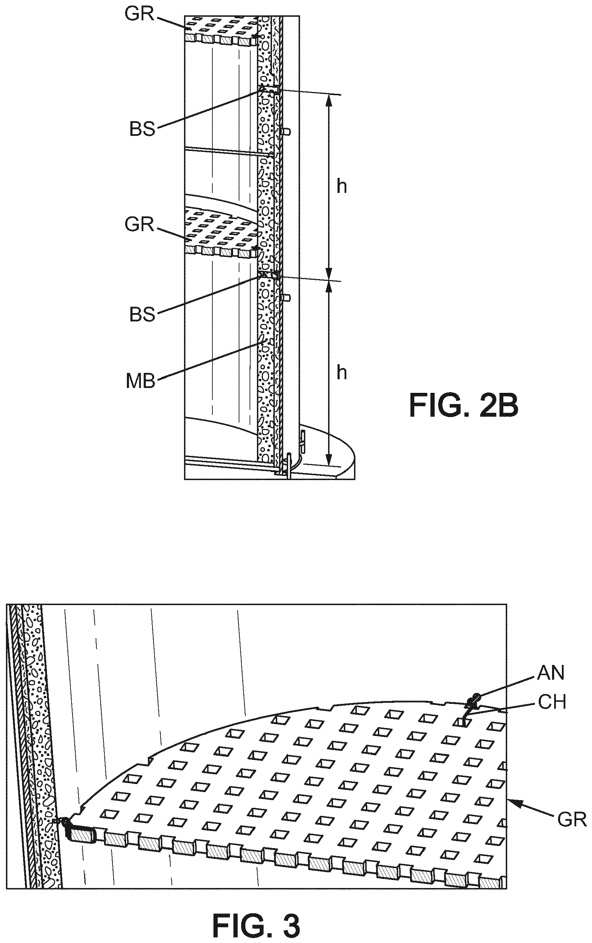

Dans une réalisation visible sur la figure 2B commentée en détail plus loin, les éléments entretoises comportent une pluralité de grilles (références GR) agencées sensiblement horizontalement dans le conteneur et à des hauteurs différentes du conteneur. Une telle réalisation est avantageusement mise en oeuvre pour assurer une homogénéité de répartition du matériau sur toute la hauteur du conteneur.

Dans un mode de réalisation, les parois sont en béton réfractaire et le conteneur comporte en outre une coque d'acier entourant les parois, pour contenir encore une contrainte s'exerçant vers l'extérieur des parois.

Avantageusement, la coque d'acier comporte des moyens d'ouverture aménagés dans une coiffe supérieure de la coque, notamment pour des opérations de maintenance. Par exemple, il est possible d'introduire dans le conteneur, par cette ouverture, le matériau de stockage thermique.

Dans une forme de réalisation, le conteneur comporte en outre un isolant thermique réparti entre les parois de béton et la coque d'acier. Cette forme de réalisation permet de limiter une dilatation de la coque faisant suite à un cycle de montée en température du matériau de stockage. Ainsi, elle concourt encore à limiter une contrainte susceptible de s'exercer vers l'extérieur des parois du conteneur.

Avantageusement, la coque d'acier peut comporter des ouvertures de piquage pour injecter l'isolant thermique entre les parois et la coque. Par exemple, l'isolant thermique peut comporter de la laine en vrac et on peut prévoir en outre des blocs de support aménagés entre les parois de béton et la coque d'acier pour éviter une chute de la laine et son tassement dans le bas du conteneur.

Dans une réalisation, les parois reposent sur une dalle inclinée pour récupérer au moins de l'eau au fond du conteneur, si un phénomène de condensation se produit. Une telle réalisation permet ainsi d'éviter une accumulation d'eau en fond de conteneur, susceptible de le fragiliser mécaniquement et de rendre les cycles thermiques moins efficaces. Cette eau peut être issue de l'air chaud ou froid injecté dans le conteneur pendant les cycles.

En effet, le conteneur comporte :
- une ouverture à un niveau supérieur du conteneur pour le passage d'un gaz chaud (par exemple de l'air chaud issu d'un traitement thermique amont et injecté dans le conteneur pour le stockage de chaleur (phase de « charge » décrite ci-après)),
- et une ouverture à un niveau inférieur pour le passage d'un gaz froid (par exemple pour récupérer l'air froid chassé par l'air chaud pendant la phase de charge, ou pour injecter de l'air froid pour s'échauffer au contact du matériau de stockage et être récupéré à l'ouverture supérieure du conteneur (phase de « décharge » décrite ci-après)).

Ainsi, la présente invention permet de limiter les contraintes dans le conteneur, d'améliorer sa tenue mécanique, d'augmenter ainsi sa durée de vie et, de là, d'optimiser les coûts d'investissement dans un tel conteneur et de sa maintenance.

Avantageusement, la structure du conteneur au sens de l'invention offre la capacité d'utiliser des matériaux en vrac et non pas uniquement une structure autoportante comme dans les cowpers d'aciérie ou les fours verriers.

D'autres avantages et caractéristiques de l'invention apparaîtront à la lecture de la description d'exemples de réalisation donnés ci-après, et à l'examen des dessins annexés sur lesquels :
- la figure 1 illustre une vue d'ensemble du conteneur selon un exemple de réalisation de l'invention,
- la figure 2A illustre une vue en coupe latérale de moyens d'isolation thermique du conteneur, dans un exemple de réalisation,
- la figure 2B illustre une vue en coupe latérale faisant apparaître des grilles de maintien du matériau de stockage thermique,
- la figure 3 représente en particulier les moyens de fixation d'une grille de maintien aux parois du conteneur,
- la figure 4 illustre une dalle de support du conteneur avec son ancrage, dans un exemple de réalisation,
- la figure 5 est une vue de l'intérieur du conteneur, montrant le mur en béton réfractaire soutenu par des tirants TA.

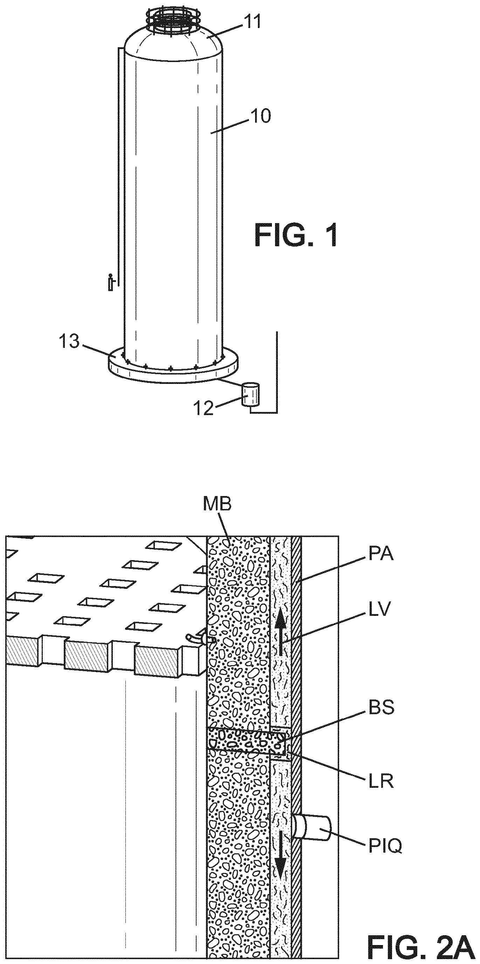

Bien que l'invention s'applique tout aussi bien à une structure béton qu'à une structure acier (avec préférentiellement dans les deux cas une ouverture de maintenance en haut du dispositif comme représenté sur la figure 1), le conteneur comporte dans l'exemple représenté sur la figure 1 une coque extérieure en acier (ou « virole ») 10, surmontée d'une coiffe en acier 11, munie d'une ouverture comprenant une passerelle (pour maintenance) et une porte d'entrée par le dessus, avec anneau d'ancrage pour pouvoir enlever la coiffe pour une opération de maintenance, typiquement.

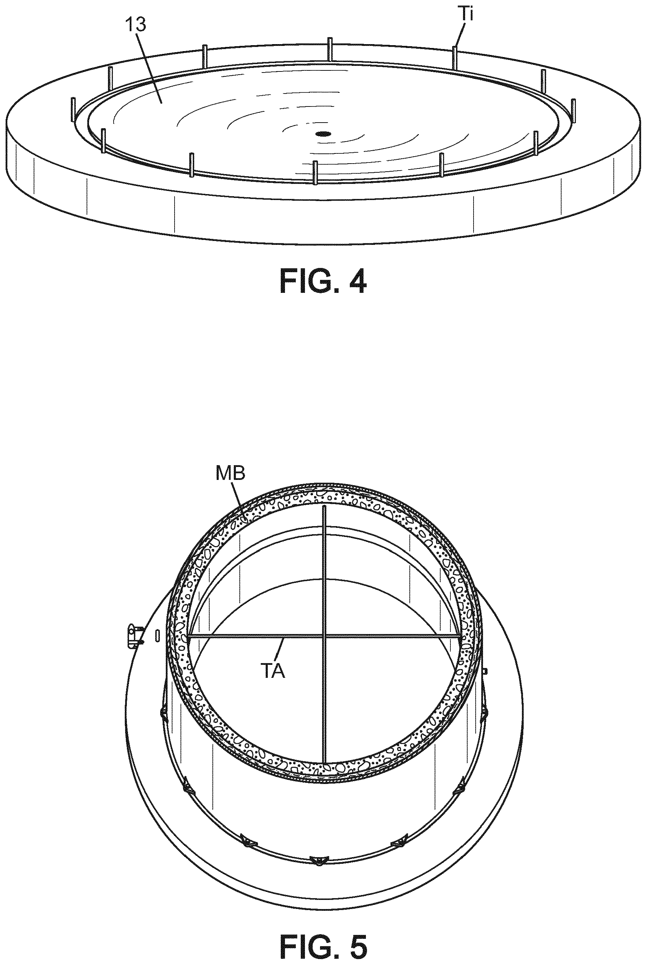

On prévoit en outre un moyen de récupération d'eau 12 susceptible de se condenser dans le conteneur. A cet effet, on prévoit un fond de cuve très légèrement conique vers le bas, dans la dalle 13 portant la virole. Une telle réalisation permet une évacuation comme illustré sur la figure 4 (représentée très schématiquement par un trou). On a représenté aussi sur la figure 4 des tiges métalliques TI de maintien de cuve (par exemple des tiges filetées), encastrées dans le béton de la dalle de fond pour accueillir la virole 10.

Le système fonctionne alors comme suit.
En phase dite « de charge », de l'air chaud sous pression est introduit par exemple par le haut de la virole. Cet air transfère sa chaleur au matériau de stockage thermique contenu dans le conteneur. L'air est ensuite extrait, en étant plus froid, en bas du conteneur. La température du matériau à l'intérieur du conteneur augmente selon un gradient vertical de température (matériau à haute température en haut et plus froid vers le bas).
En phase dite « de décharge », le procédé est inverse, et ce par injection d'air froid sous pression par le bas du conteneur, et récupération de chaleur à partir de l'air chaud sortant en haut du conteneur.

En référence à la figure 2A, les parois latérales sont composées chacune :
- d'un mur en béton réfractaire MB, enfermant le matériau de stockage thermique,
- d'un moyen d'isolation LR contenant un matelas de laine de roche, par exemple, ou tout autre isolant (aérogel ou autres),
- d'une paroi en acier PA, pour contenir la pression régnant dans le conteneur.

On peut prévoir en outre un piquage PIQ sur la paroi en acier pour pouvoir injecter de l'isolant (par exemple pour insérer de la laine de roche - flèche LV) entre le mur MB et la paroi d'acier PA, pendant l'exploitation du système de stockage, notamment en cas d'élévation de température de la coque d'acier 10 (dont la paroi PA constitue un élément).

Cet agencement en « sandwich » permet :
- d'isoler thermiquement le matériau de stockage thermique pour réduire les pertes thermiques (béton réfractaire du mur MB avec isolation de la laine LR),
- de réduire la température de la paroi en acier dont les caractéristiques pourraient être dégradées à plus haute température,
- de limiter la température de peau extérieure de cette paroi d'acier pour des raisons de sécurité,
- de contenir la pression régnant dans le conteneur par la paroi en acier (en fonction de l'épaisseur de celle-ci).

On remarque en outre, sur la figure 2A, un bloc de support en béton BS, permettant de limiter le tassement vertical de l'isolant (par exemple de la laine de roche). En référence à la figure 2B, ces blocs support BS sont préférentiellement espacés d'une hauteur choisie h (par exemple de cinq mètres, pour un conteneur haut d'une vingtaine de mètres).

On remarque en outre sur la figure 2B des grilles GR comportant des ouvertures permettant une circulation d'air. On peut prévoir plusieurs grilles GR pour maintenir du matériau de stockage à plusieurs niveaux de hauteur dans le conteneur. Ces grilles de maintien du matériau de stockage thermique (pouvant par exemple être « en vrac » à différentes hauteurs du conteneur) permettent d'éviter un tassement du matériau vers le fond de cuve, tassement qui engendrerait des contraintes mécaniques latérales trop importantes pour espérer une tenue durable du conteneur. Ainsi, la disposition d'une ou plusieurs grilles de ce type permet de garantir une intégrité du conteneur pendant une plus longue durée que dans l'état de l'art.

Par exemple, on peut prévoir une répartition du matériau de stockage thermique à la construction du conteneur. En effet, le conteneur peut se construire de bas en haut, en posant la dalle de béton 13 et en montant progressivement les murs réfractaires. On installe alors plusieurs grilles de maintien successives et on dispose le matériau de stockage thermique sur chaque grille, et ainsi de suite jusqu'en haut du conteneur. Ensuite, en phase de maintenance, l'ouverture en haut du conteneur (dans la coiffe) peut être utile pour pouvoir y intervenir à l'intérieur, pour des opérations de maintenance, démonter les grilles et enlever le matériau de stockage pour le remplacer par exemple. On évite ainsi de multiplier les ouvertures dans le conteneur et limiter alors son efficacité de stockage thermique.

Le matériau de stockage thermique peut être en vrac (composé de fragments) et peut être réparti ainsi sur les grilles GR. En variante, l'invention peut également être mise en oeuvre avec des matériaux autoportants (c'est-à-dire d'un seul bloc). Il a été observé que de tels matériaux peuvent se dégrader au bout d'un certain nombre de cycles et des fragments sont susceptibles de s'effondrer en fond de cuve. Les grilles de maintien permettent alors de retenir les blocs pour éviter un tassement en fond de cuve, en maintenant ainsi une homogénéité de répartition du matériau dans la hauteur du conteneur.

On a représenté sur la figure 3 une grille de maintien GR, en détail, vue de l'intérieur du conteneur. Les anneaux AN permettent ici de ne pas contraindre la structure (notamment les grilles) qui subit des dilatations thermiques lors des phases successives de charge et de décharge, et donc d'absorber ces dilatations. Des chaines (par exemple métalliques) relient les anneaux AN à chaque grille GR. Ainsi, l'utilisation d'anneaux associés à des chaînes comme moyen de fixation des grilles sur les parois latérales permet de répondre, sans générer de contraintes mécaniques, aux dilatations thermiques liées aux cycles thermiques. Elle permet aussi un démontage simple et rapide des grilles pendant notamment des opérations de maintenance (pour accéder par exemple à une grille inférieure ou au fond de cuve).

De façon générale, le maintien du matériau de stockage thermique à différentes hauteurs du conteneur permet :
- l'utilisation de matériau de stockage thermique en vrac, donc moins coûteux,
- d'éviter son tassement en fond de cuve, susceptible de fragiliser la tenue mécanique du conteneur,
- d'assurer une meilleure répartition, donc une meilleure efficacité, de l'interaction thermique de l'air avec le matériau de stockage.

Avantageusement, la structure du conteneur peut encore être renforcée par des tirants en acier TA (figure 5) ancrés dans la paroi intérieure du mur en béton réfractaire MB et soutenant ainsi le mur MB de l'intérieur.

Les applications envisagées sont multiples et fonctions du matériau de stockage. Dès lors que ce dernier se présente sous forme solide, le diamètre des ouvertures de grilles peut être adapté aux dimensions des particules du matériau. Un conteneur au sens de l'invention peut ainsi être utilisé dans tout système nécessitant un stockage thermique, et notamment dans les systèmes quasi-adiabatiques de type « CAES » (pour « Compressed Air Energy Storage »), dans des centrales solaires thermodynamiques, et autres.

## Revendications

1. Conteneur d'un système de stockage thermique, destiné à recevoir du matériau de stockage thermique entre des parois internes du conteneur, **caractérisé en ce qu'**il comporte des éléments entretoises, ancrés aux parois internes, pour limiter une contrainte s'exerçant vers l'extérieur des parois et **en ce que** les éléments entretoises comportent au moins une grille (GR) agencée sensiblement horizontalement dans le conteneur et fixée par au moins deux points d'ancrage sur des parois opposées du conteneur et à une hauteur choisie du conteneur.

2. Conteneur selon la revendication 1, **caractérisé en ce que** la grille (GR) comporte des ouvertures.

3. Conteneur selon l'une des revendications 1 et 2, **caractérisé en ce que** les points d'ancrage de grille sont amovibles.

4. Conteneur selon l'une des revendications précédentes, **caractérisé en ce que** les points d'ancrage comportent chacun un anneau (AN) relié à la grille (GR) par une chaîne (CH).

5. Conteneur selon l'une des revendications précédentes, **caractérisé en ce que** les éléments entretoises comportent une pluralité de grilles (GR) agencées sensiblement horizontalement dans le conteneur et à des hauteurs différentes du conteneur.

6. Conteneur selon l'une des revendications précédentes, **caractérisé en ce que** les éléments entretoises comportent des tirants (TA) fixés à des parois opposées du conteneur.

7. Conteneur selon l'une des revendications précédentes, **caractérisé en ce que** lesdites parois sont en béton réfractaire (MB), et **en ce qu'**il comporte en outre une coque d'acier (PA) entourant lesdites parois, pour contenir une contrainte s'exerçant vers l'extérieur des parois.

8. Conteneur selon la revendication 7, **caractérisé en ce que** la coque d'acier comporte des moyens d'ouverture aménagés dans une coiffe supérieure (11) de la coque.

9. Conteneur selon l'une des revendications 7 et 8, **caractérisé en ce que** le conteneur comporte en outre un isolant thermique (LR) réparti entre les parois de béton et la coque d'acier.

10. Conteneur selon la revendication 9, **caractérisé en ce que** la coque d'acier comporte des ouvertures de piquage (PIQ) pour injecter l'isolant thermique entre les parois et la coque.

11. Conteneur selon l'une des revendications 9 et 10, **caractérisé en ce que**, l'isolant thermique comportant de la laine en vrac (LV), des blocs de support (BS) sont aménagés entre les parois de béton (MB) et la coque d'acier (PA) pour éviter une chute de la laine et son tassement dans le bas du conteneur.

12. Conteneur selon l'une des revendications précédentes, **caractérisé en ce que** les parois reposent sur une dalle (13) inclinée pour récupérer au moins de l'eau au fond du conteneur.

## Patentansprüche

1. Behälter eines Wärmespeichersystems, welcher dazu bestimmt ist, Wärmespeichermaterial zwischen den Innenwänden des Behälters aufzunehmen,
**dadurch gekennzeichnet, dass** dieser Abstandshalterelemente umfasst, die an den Innenwänden verankert sind, um eine Belastung zu begrenzen, die zur Außenseite der Wände ausgeübt wird, und dadurch, dass die Abstandshalterelemente mindestens ein Gitter (GR) umfassen, das im Wesentlichen horizontal im Behälter angeordnet ist und durch mindestens zwei Verankerungspunkte an den gegenüberliegenden Wänden des Behälters und in einer ausgewählten Höhe des Behälters angeordnet ist.

2. Behälter nach Anspruch 1,
**dadurch gekennzeichnet, dass** das Gitter (GR) Öffnungen umfasst.

3. Behälter nach einem der Ansprüche 1 und 2,
**dadurch gekennzeichnet, dass** die Verankerungspunkte des Gitters lösbar sind.

4. Behälter nach einem der vorhergehenden Ansprüche,
**dadurch gekennzeichnet, dass** die Verankerungspunkte jeweils einen Ring (AN) umfassen, der mit dem Gitter (GR) durch eine Kette (CH) verbunden ist.

5. Behälter nach einem der vorhergehenden Ansprüche,
**dadurch gekennzeichnet, dass** die Abstandshalterelemente eine Vielzahl von Gittern (GR) umfassen, die im Wesentlichen horizontal im Behälter und in verschiedenen Höhen des Behälters angeordnet sind.

6. Behälter nach einem der vorhergehenden Ansprüche,
**dadurch gekennzeichnet, dass** die Abstandshalterelemente Zugstangen (TA) umfassen, die an den gegenüberliegenden Wänden des Behälters befestigt sind.

7. Behälter nach einem der vorhergehenden Ansprüche,
**dadurch gekennzeichnet, dass** die Wände aus feuerfestem Beton (MB) bestehen, und dadurch, dass dieser außerdem eine Stahlhülle (PA) umfasst, welche die Wände umgibt, um eine Belastung zurückzuhalten, die zur Außenseite der Wände ausgeübt wird.

8. Behälter nach Anspruch 7,
**dadurch gekennzeichnet, dass** die Stahlhülle Öffnungsmittel umfasst, die in einer oberen Haube (11) der Hülle angeordnet sind.

9. Behälter nach einem der Ansprüche 7 und 8,
**dadurch gekennzeichnet, dass** der Behälter außerdem ein Wärmeisoliermittel (LR) umfasst, das zwischen den Betonwänden und der Stahlhülle verteilt ist.

10. Behälter nach Anspruch 9,
**dadurch gekennzeichnet, dass** die Stahlhülle Abzweigungsöffnungen (PIQ) umfasst, um das Wärmeisoliermittel zwischen die Wände und die Hülle einzubringen.

11. Behälter nach einem der Ansprüche 9 und 10,
**dadurch gekennzeichnet, dass**, da das Wärmeisoliermittel lose Wolle (LV) umfasst, Stützblöcke (BS) zwischen den Betonwänden (MB) und der Stahlhülle (PA) angeordnet sind, um ein Fallen der Wolle und ihr Verdichten am Boden des Behälters zu verhindern.

12. Behälter nach einem der vorhergehenden Ansprüche,
**dadurch gekennzeichnet, dass** die Wände auf einer geneigten Platte (13) liegen, um mindestens teilweise Wasser vom Boden des Behälters zu sammeln.

## Claims

1. Container of a thermal storage system, intended to receive thermal storage material between inner walls of the container, **characterised in that** it comprises spacer elements, anchored to the inner walls, in order to limit a stress that is exerted outwards of the walls and **in that** the spacer elements comprise at least one grid (GR) arranged substantially horizontally in the container and fixed by at least two anchoring points on opposite walls of the container and at a chosen height of the container.

2. Container according to claim 1, **characterised in that** the grid (GR) comprises openings.

3. Container according to one of claims 1 and 2, **characterised in that** the grid anchoring points are removable.

4. Container according to one of the preceding claims, **characterised in that** the anchoring points each comprise a ring (AN) connected to the grid (GR) by a chain (CH).

5. Container according to one of the preceding claims, **characterised in that** the spacer elements comprise a plurality of grids (GR) arranged substantially horizontally in the container and at different heights of the container.

6. Container according to one of the preceding claims, **characterised in that** the spacer elements comprise tie rods (TA) fixed to opposite walls of the container.

7. Container according to one of the preceding claims, **characterised in that** said walls are made from refractory concrete (MB), and **in that** it further comprises a steel shell (PA) surrounding said walls, in order to contain a stress that is exerted outwards of the walls.

8. Container according to claim 7, **characterised in that** the steel shell comprises means for opening arranged in an upper cap (11) of the shell.

9. Container according to one of claims 7 and 8, **characterised in that** the container further comprises thermal insulation (LR) distributed between the concrete walls and the steel shell.

10. Container according to claim 9, **characterised in that** the steel shell comprises tapping openings (PIQ) in order to inject thermal insulation between the walls and the shell.

11. Container according to one of claims 9 and 10, **characterised in that**, the thermal insulation comprising loose wool (LV), support blocks (BS) are arranged between the concrete walls (MB) and the steel shell (PA) in order to prevent the wool from falling and from becoming packed in the bottom of the container.

12. Container according to one of the preceding claims, **characterised in that** the walls rest on an inclined slab (13) in order to receive at least water at the bottom of the container.
